# EUROPEAN PATENT SPECIFICATION

(11) **EP 3 622 369 B1**
(45) Date of publication and mention of the grant of the patent: **21.04.2021**
(21) Application number: 18727570.6
(22) Date of filing: 09.05.2018
(51) Int. Cl.: G06F 1/20, G06F 1/16, G06F 1/3215, G06F 1/3234, G06F 3/01

(54) **SYSTEM AND METHOD FOR INTELLIGENT ADJUSTMENT OF AN IMMERSIVE MULTIMEDIA WORKLOAD IN A PORTABLE COMPUTING DEVICE**
SYSTEM UND VERFAHREN ZUR INTELLIGENTEN EINSTELLUNG EINER IMMERSIVEN MULTIMEDIA-ARBEITSLAST IN EINER TRAGBAREN DATENVERARBEITUNGSVORRICHTUNG
SYSTÈME ET PROCÉDÉ D'AJUSTEMENT INTELLIGENT D'UNE CHARGE DE TRAVAIL MULTIMÉDIA IMMERSIVE DANS UN DISPOSITIF INFORMATIQUE PORTABLE

(30) Priority: 11.05.2017 US 201715592664
(43) Date of publication of application: 18.03.2020
(73) Proprietor: QUALCOMM Incorporated, San Diego, CA 92121-1714 (US)
(72) Inventor: TAVAKOLI, Mehrad, San Diego California 92121 (US); MIR, Idreas, San Diego California 92121 (US); KHAN, Moinul, San Diego California 92121 (US); ALTON, Ronald, San Diego California 92121 (US); CASCAVAL, Gheorghe, San Diego California 92121 (US); VIJAYAKUMAR, Rajiv, San Diego California 92121 (US); MONDAL, Mriganka, San Diego California 92121 (US); RIBBLE, Maurice, San Diego California 92121 (US); RENSCHLER, Martin, San Diego California 92121 (US)
(74) Representative: Bardehle Pagenberg Partnerschaft mbB Patentanwälte Rechtsanwälte
(86) International application number: PCT/US2018/031809
(87) International publication number: WO 2018/208921

(56) References cited:
- US-A1- 2014 359 324
- US-A1- 2015 067 377
- US-A1- 2015 177 822
- US-A1- 2015 181 117
- US-A1- 2016 364 904

## Description

### TECHNICAL FIELD

The present invention relates to a method, a computer system and a computer program for intelligent adjustment of an immersive multimedia workload in a portable computing device.

### DESCRIPTION OF THE RELATED ART

Portable computing devices ("PCDs") are becoming necessities for people on personal and professional levels. These devices may include cellular telephones, portable digital assistants ("PDAs"), portable game consoles, palmtop computers, and other portable electronic devices.

One unique aspect of PCDs is that they typically do not have active cooling devices, like fans, which are often found in larger computing devices such as laptop and desktop computers. Instead of using fans, PCDs may rely on the spatial arrangement of electronic packaging so that two or more active and heat producing components are not positioned proximally to one another. Many PCDs may also rely on passive cooling devices, such as heat sinks, to manage thermal energy among the electronic components which collectively form a respective PCD.

The reality is that PCDs are typically limited in size and, therefore, room for components within a PCD often comes at a premium. As such, there rarely is enough space within a PCD for engineers and designers to mitigate thermal degradation or failure of processing components by using clever spatial arrangements or strategic placement of passive cooling components. Therefore, current systems and methods rely on various temperature sensors embedded on the PCD chip and elsewhere to monitor the dissipation of thermal energy and then use the measurements to trigger application of thermal power management techniques that adjust workload allocations, processing speeds, etc. to reduce thermal energy generation.

For example, under a heavy processing workload associated with an immersive multimedia gaming use case (e.g., a virtual reality or augmented reality use case), current systems and methods throttle the voltage and frequency of multiple components to remain within an overall power budget that precludes excessive thermal energy generation. In doing so, the processing workload associated with the immersive multimedia gaming use case is not reduced but, rather, the speed at which the workload is processed is slowed. The inevitable result is that excessive thermal energy generation is avoided at the expense of the user experience ("Ux") as measured in user perceived quality of service ("QoS"). Indeed, in an immersive multimedia use case, a reduction in processing bandwidth that causes frame drops and/or a reduced frame rate can give the user motion sickness. As such, current systems and methods for mitigating excessive thermal energy generation by processing components in a PCD are inadequate when the PCD is subject to an immersive multimedia use case.

Therefore, what is needed in the art is a system and method for intelligent immersive multimedia workload adjustment in a PCD. More specifically, what is needed in the art is a system and method that manages an immersive multimedia workload in a PCD via selective adjustments of component performance settings to avoid frame drops and/or detrimental frame rate reduction.

US 2015/067377 A1 discloses methods and devices for managing data flows for concurrent multimedia applications executing on a device including a SoC, in response to determining that a temperature or power consumption exceeds a threshold. A lowest priority data flow may be identified. A data flow path associated with the identified lowest priority data flow may be traced. A multimedia parameter of any hardware module along the data flow path may be reduced. When the temperature or power consumption no longer exceeds the threshold, a highest priority data flow among the multimedia applications that has had the multimedia parameter reduced may be identified. A data flow path for a data flow associated with the identified highest priority data flow may be traced. The multimedia parameter may be restored to an original value along the traced data flow path for the data flow associated with the identified highest priority data flow.

US 2016/364904 A1 discloses a method comprising determining, at a first time, a representation of a first head rotation of a head mounted display (HMD) using a first inertial sensor sample stream and rendering, at an application processor, a texture based on the first head rotation. The method further includes determining, at a second time subsequent to the first time, a representation of a second head rotation of the HMD using a second inertial sensor sample stream having a higher sampling rate than the first inertial sensor sample stream, and generating, at a compositor, a rotated representation of the texture based on a difference between the first head rotation and the second head rotation.

The invention is defined by the independent claims 1, 8 and 15. Further aspects of the invention are outlined in the dependent claims.

Advantageously, by adjusting parameter settings of the thermally aggressive processing component that do not directly, or at least significantly, impact Ux for an immersive multimedia use case, I.e. parameters that do not negatively impact the motion to photon latency and/or the frame rate, embodiments of the solution work to reduce power consumption and mitigate thermal energy generation without risking a thermal mitigation action that fatally or overly impacts Ux for the immersive multimedia content.

### BRIEF DESCRIPTION OF THE DRAWINGS

In the drawings, like reference numerals refer to like parts throughout the various views unless otherwise indicated. For reference numerals with letter character designations such as "102A" or "102B", the letter character designations may differentiate two like parts or elements present in the same figure. Letter character designations for reference numerals may be omitted when it is intended that a reference numeral to encompass all parts having the same reference numeral in all figures.
FIG. 1 illustrates the coupling of a portable computing device ("PCD") configured and programmed to render an immersive multimedia output with an exemplary virtual reality headset that enables a user to perceive the immersive multimedia output;
FIG. 2 is a functional block diagram illustrating an on-chip system for implementing intelligent management of an immersive multimedia workload in a portable computing device ("PCD") via selective adjustments of component performance settings to avoid frame drops and/or detrimental frame rate reduction;
FIG. 3 illustrates an exemplary record of adjustable performance settings and their relative impact on power consumption by exemplary processing components operating according to an immersive multimedia workload;
FIGs. 4A, 4B, 4C, and 4D illustrate exemplary profile graphs of an exemplary GPU processing component for a given immersive multimedia use case, each illustrating a relationship between a performance setting, user experience relative to the setting, and power consumption associated with the setting;
FIG. 5 depicts a logical flowchart illustrating a method for intelligent management of an immersive multimedia workload in a portable computing device ("PCD") via selective adjustments of component performance settings to avoid frame drops and/or detrimental frame rate reduction;
FIG. 6 is a functional block diagram illustrating an exemplary, non-limiting aspect of the PCD of FIGs 1 and 2 in the form of a wireless telephone for implementing methods and systems for intelligent management of an immersive multimedia workload; and
FIG. 7 is a schematic diagram illustrating an exemplary software architecture of the PCD of FIG. 6 for intelligent management of an immersive multimedia workload.

### DETAILED DESCRIPTION

The word "exemplary" is used herein to mean "serving as an example, instance, or illustration." Any aspect described herein as "exemplary" is not necessarily to be construed as exclusive, preferred or advantageous over other aspects.

In this description, the term "application" may also include files having executable content, such as: object code, scripts, byte code, markup language files, and patches. In addition, an "application" referred to herein, may also include files that are not executable in nature, such as documents that may need to be opened or other data files that need to be accessed.

As used in this description, the terms "component," "database," "module," "system," "thermal energy generating component," "processing component" and the like are intended to refer to a computer-related entity, either hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device may be a component. One or more components may reside within a process and/or thread of execution, and a component may be localized on one computer and/or distributed between two or more computers. In addition, these components may execute from various computer readable media having various data structures stored thereon. The components may communicate by way of local and/or remote processes such as in accordance with a signal having one or more data packets (*e.g.,* data from one component interacting with another component in a local system, distributed system, and/or across a network such as the Internet with other systems by way of the signal).

In this description, the terms "central processing unit ("CPU")," "digital signal processor ("DSP")," "graphical processing unit ("GPU")," and "chip" are used to refer to exemplary processing components that may be processing a workload according to an immersive multimedia application. Moreover, a CPU, DSP, GPU or a chip may be comprised of one or more distinct processing components generally referred to herein as "core(s)." Additionally, to the extent that a CPU, DSP, GPU, chip or core is a functional component within a PCD that consumes various levels of power to operate at various levels of functional efficiency, one of ordinary skill in the art will recognize that the use of these terms does not limit the application of the disclosure to the context of processing components within a PCD.

In this description, it will be understood that the terms "thermal" and "thermal energy" may be used in association with a device or component capable of generating or dissipating energy that can be measured in units of "temperature." Consequently, it will further be understood that the term "temperature," with reference to some standard value, envisions any measurement that may be indicative of the relative warmth, or absence of heat, of a "thermal energy" generating device or component. For example, the "temperature" of two components is the same when the two components are in "thermal" equilibrium.

In this description, the terms "workload," "process load," "process workload," "use case workload," "immersive multimedia workload," "VR workload" and the like are used interchangeably and generally directed toward the processing burden, or percentage of processing burden, associated with a given processing component(s) in a given embodiment.

In this description, the terms "thermal mitigation technique(s)," "thermal policies," "thermal power management," "thermal mitigation measure(s)," "throttling" and the like are used interchangeably. Notably, one of ordinary skill in the art will recognize that, depending on the particular context of use, any of the terms listed in this paragraph may serve to describe hardware and/or software operable to increase performance at the expense of thermal energy generation, decrease thermal energy generation at the expense of performance, or alternate between such goals.

In this description, the term "portable computing device" ("PCD") is used to describe any device operating on a limited capacity power supply, such as a battery. Although battery operated PCDs have been in use for decades, technological advances in rechargeable batteries coupled with the advent of third generation ("3G") and fourth generation ("4G") wireless technology have enabled numerous PCDs with multiple capabilities. Therefore, a PCD may be a cellular telephone, a satellite telephone, a pager, a PDA, a smartphone, a navigation device, a smartbook or reader, a media player, a combination of the aforementioned devices, a laptop computer with a wireless connection, among others.

The term "use case" is used herein to refer to an instantaneous state of PCD operation in delivering immersive multimedia functionality to a user. Inevitably, an immersive multimedia use case is tied to the execution of one or more applications by a PCD, such as a virtual reality gaming application for example. As such, it will be understood that any given use case dictates that one or more components in a PCD are actively consuming power and delivering functionality. Notably, not all use cases require the same combination of active components and/or the same levels of power consumption by active components. Moreover, although a given use case may be largely defined by a single application in execution (such as an immersive multimedia gaming application), it will be understood that other applications unrelated to said single application may also be running and contributing to the aggregate power consumption and functionality of the use case.

In this description, the terms "immersive multimedia," "virtual reality," "augmented reality," "VR," and "AR" are used interchangeably to refer to applications executed by a PCD and experienced by a user when the PCD is coupled to a VR headset.

In this description, and as would be understood by one of ordinary skill in the art, the acronym MSAA stands for multi sample anti-aliasing, the acronym CAC stands for chromatic aberration correction, FPS stands for frames per second, DOF stands for degrees of freedom, and LOD stands for level of detail.

Minimizing excessive or detrimental thermal energy generation in a PCD executing a virtual reality application, without unnecessarily impacting quality of service ("QoS"), can be accomplished by monitoring processing component power consumption and/or one or more sensor measurements that correlate with chip temperatures and skin temperatures of the PCD. By closely monitoring the power consumption and temperature measurements, an intelligent immersive multimedia workload management solution in a PCD may systematically and individually adjust performance settings of active processing components in an effort to optimize user experience without risking execution of thermal management techniques that could cause frame drops or frame rate reductions. Advantageously, by selectively adjusting performance settings as a function of user experience, intelligent immersive multimedia workload management systems and methods can optimize QoS under any use case workload.

As one of ordinary skill in the art would understand, immersive multimedia applications require a low motion to photon latency ("m/pl") ratio in order to ensure a positive user experience. That is, a positive user experience in virtual reality gaming necessarily requires that the application respond quickly to the user's motion; otherwise, a perceptible delay in responding to the user's motion may cause the user to experience motion sickness. To be most effective, an immersive multimedia application must be capable of simulating real world visual feedback to a user's motion. For this reason, it is more important for an immersive multimedia system to process a workload quickly than it is for it to maintain a visually rich output.

In order to keep the m/pl ratio sufficiently low, immersive multimedia applications in PCDs execute an asynchronous timewarp workload that reacts to sensor inputs indicative of the user's motion and physical positioning (such as, but not necessarily limited to, accelerometer, gyroscope, and magnetometer readings). The asynchronous timewarp workload is in addition to the underlying gaming workload and, as such, adds processing burden to one or more of the camera, DSP, CPU and GPU. It is the asynchronous timewarp workload that enables a VR application to reconcile the visual output rendered to the user by the game with the physical motion of the user. Consequently, and as would be understood by one of ordinary skill in the art, virtual reality applications require relatively more power consumption than non-VR gaming applications.

The increased power consumption requirements of immersive multimedia applications in PCDs makes those applications especially susceptible to thermal mitigation policies. The increased power consumption may lead to excessive thermal energy generation that, in turn, triggers the application of thermal mitigation measures. As explained above, thermal mitigation measures may be extremely detrimental to user experience for an immersive multimedia use case. Advantageously, embodiments of the solution seek to avoid the need for thermal mitigation during a VR use case by recognizing a potential thermal event and working to avoid it by adjusting aspects of the VR-related workload that least affect user experience. In this way, the present invention preserves processing bandwidth for portions of the VR workload that ensure a low m/pl ratio and high frame rate. Essentially, the present invention seeks to avoid thermal mitigation measures in the PCD by changing or adjusting frame workload complexity in an active immersive multimedia use case.

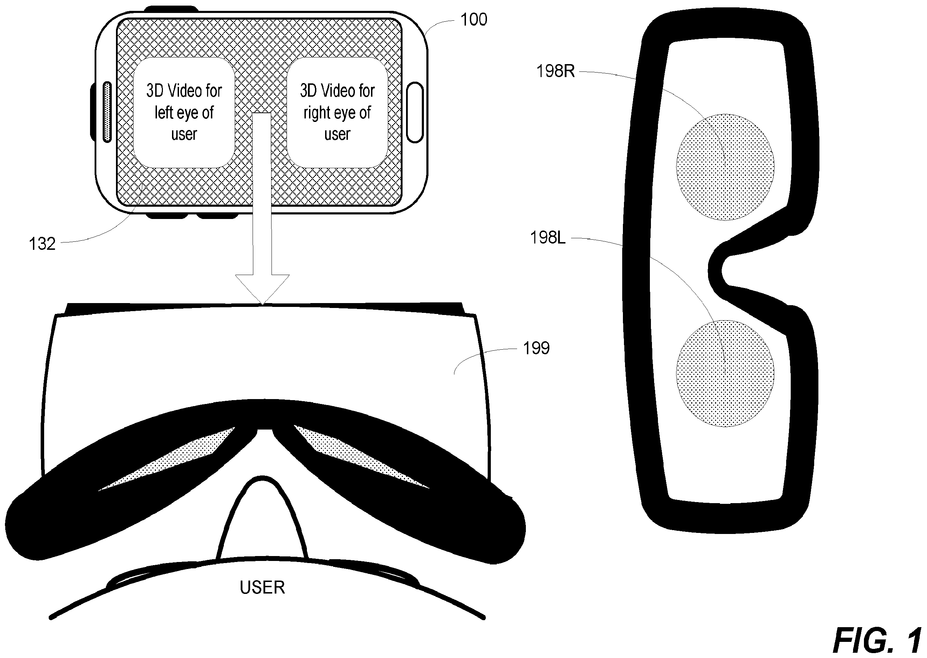

FIG. 1 illustrates the coupling of a portable computing device ("PCD") 100 configured and programmed to render an immersive multimedia output with an exemplary virtual reality headset 199 that enables a user to perceive the immersive multimedia output. The headset 199 may have a set of left and right optical lenses 198 through which the user may visually experience a multimedia output rendered on the display 132 of the PCD 100. As one of ordinary skill in the art would understand, the display 132 may be juxtaposed and mechanically fixed to the front of the headset 199 (as indicated by the "arrow" in the FIG. 1 illustration) such that the multimedia output(s) are aligned with the left and right optical lenses 198.

With the headset 199 mounted to the user, and the PCD 100 mounted to the headset 199, motion of the user's head may be recognized by motion sensors in the PCD 100 and the multimedia output of the PCD 100 reconciled therewith. In some embodiments not covered by the claims, the headset 199 may have integrated motion sensors that pair with the PCD 100 to provide data indicative of the user's movement. As described herein, excessive latency in providing and processing data indicative of the user's movement can lead to an unacceptable motion to photon latency ("m/pl") that causes user discomfort when perceiving the immersive multimedia content.

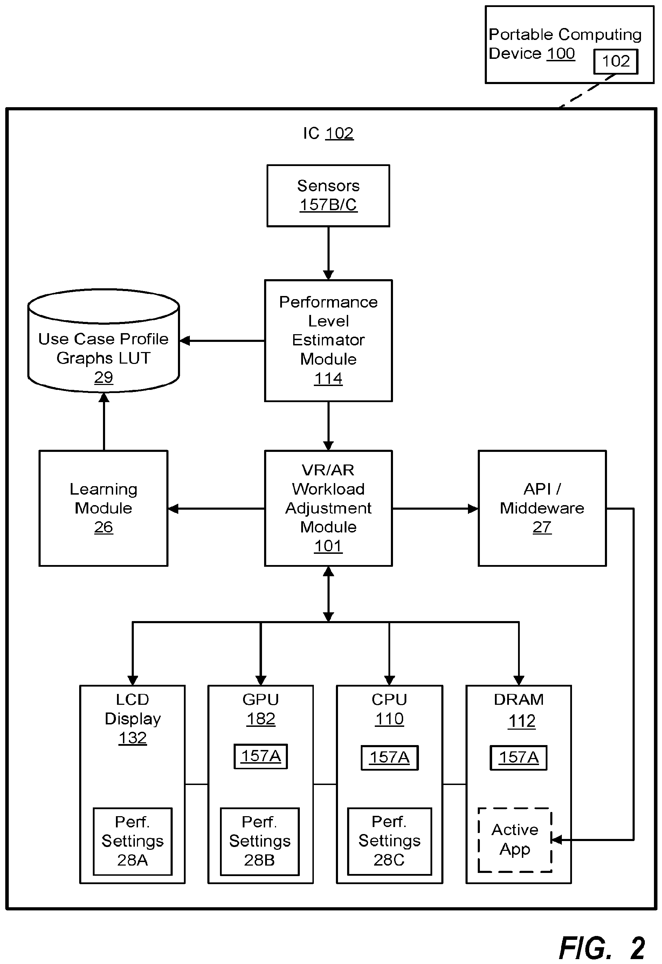

FIG. 2 is a functional block diagram illustrating an on-chip system 102 for implementing intelligent management of an immersive multimedia workload in a portable computing device ("PCD") 100 via selective adjustments of component performance settings to avoid frame drops and/or detrimental frame rate reduction. An active virtual reality application (shown stored in the DRAM) may be in execution by various processing components such as, but not necessarily limited to, the CPU 110, GPU 182 and LCD display 132. As would be understood by one of ordinary skill in the art, workloads associated with the active application may be processed by the processing components in order to generate an immersive multimedia output and user experience.

While the various processing components 110, 182, 132 are processing the various VR workloads, the performance level estimator ("PLE") module 114 is monitoring one or more sensors 157. Sensors 157A, for example, may measure junction temperatures of the respective processing components 110, 182, 132. Sensors 157B and 157C, for example, may measure skin temperature of the PCD 100 (which may provide for inference of an ambient temperature) or power levels on various power rails associated with the processing components 110, 182, 132. Sensors 157 also provide inputs to the PLE module 114 for calculating the active m/pl ratio and/or VR-specific parameters such as, but not limited to, eye buffer frame time, Timewarp frame time, etc.

With knowledge of the active VR application and the real-time sensor measurements, the PLE module 114 may query a Use Case Profile Graphs lookup table to determine a time duration until a likely thermal event triggers thermal mitigation actions. Depending on the estimated duration until a thermal event occurs, the PLE module 114 assesses a "risk level" and takes steps accordingly to work with the VR/AR workload adjustment ("VWA") module 101 to avoid or reduce the probability of the thermal event. In this way, the present invention enables VR applications to maintain high frame rates, that is high frame per second ("FPS") rates, by avoiding thermal events that could trigger throttling of processing component speeds. Further, the PLE module 114 may provide the VWA module 101 with power rail data and data taken from profile graphs stored in the LUT 29 and associated with various performance settings of the processing components 110, 182, 132.

The VWA module 101 then works to adjust the VR workload such that power consumption is reduced without having to throttle processing speeds that could lead to unwanted frame drops and/or frame rate reduction. To do so, the VWA module 101 identifies which of the processing components 110, 182, 132 is associated with a relatively high power consumption (may be determined from sensors 157 configured for measuring power levels on power rails respectively supplying power to the processing components 110, 182, 132) and then leverage the performance setting graph data to adjust those performance settings for the given processing component which reduce power consumption with the least impact on user experience. Similarly, in some embodiments not covered by the claims, the VWA module 101 may work with an application program interface ("API") or middleware 27 to cause the active immersive multimedia application to adjust its workload requirements upstream from the processing components. In this way, frame drops and/or detrimental frame rate reduction may be avoided by adjusting the scope of the VR workload emanating from the active application instead of, as in the present invention, adjusting the performance settings of the processing components to avoid processing strategic portions of the VR workload.

When querying the LUT 29, the PLE module 114 may look for records that most nearly approximate the active use case and, based on those records, determine the likelihood and timing of a future thermal event and work with the VWA module 101 to intelligently adjust a VR workload such that the future thermal event is avoided without overly or detrimentally impacting user experience with the VR use case. It is envisioned that some embodiments, not covered by the claims, of the PLE module 114 may interpolate between records in order to derive the most useful and applicable data for adjusting a VR workload. It is also envisioned that certain embodiments of the solution may include a learning module 26 that works to recognize new use cases and the response of the system 102 to actions taken by the PLE module 114 and/or VWA module 101. In such embodiments not covered by the claims, the learning module 26 may update the LUT 29 for future use and benefit of the PLE module 114.

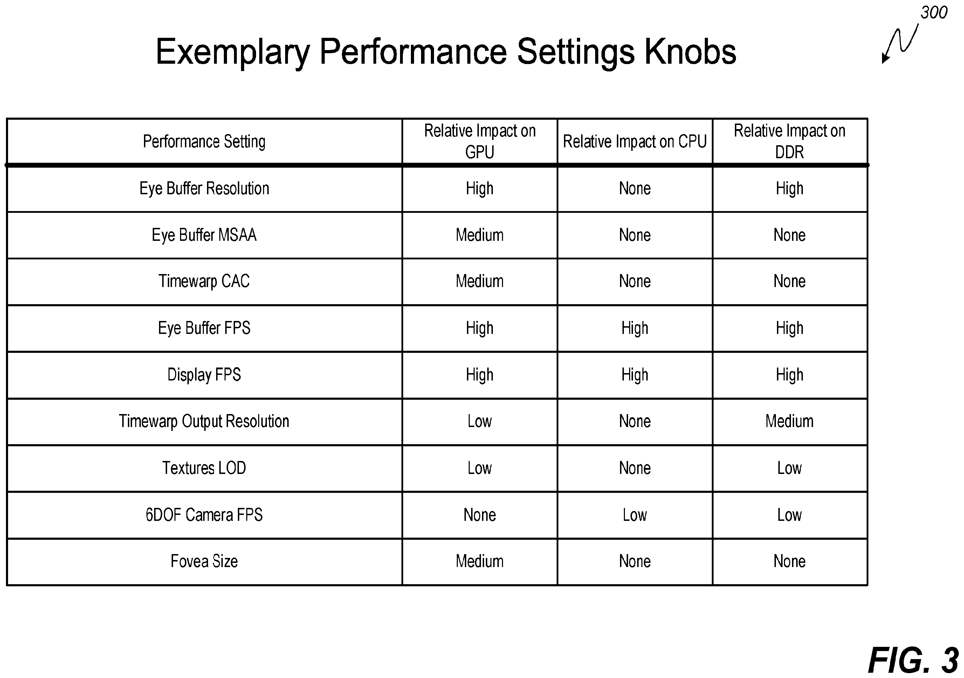

FIG. 3 illustrates an exemplary record 300 of adjustable performance settings and their relative impact on power consumption by exemplary processing components operating according to an immersive multimedia workload. The exemplary record 300 may be stored in LUT 29 (which may be instantiated in some portion of memory 112) and queried by the PLE module 114 to determine which performance settings for which thermal aggressor 110, 182, 132, 112 may be adjusted for maximum impact on power consumption and least impact on user experience.

As can be seen in the exemplary record, certain performance settings may be rated "high," "medium," "low" or "none" for impact (power consumption vs. user experience) depending upon the target component. Based on sensor measurements and/or calculations including, but not limited to, ambient environment temperature, power rail measurements, processing component junction temperatures, and m/pl levels, the PLE module 114 may determine a risk level for a thermal event. Further, in order to respond to the risk of a thermal event, the PLE module 114 may identify which one or more of the processing components is most thermally aggressive and, from there, select those performance setting knobs best positioned for adjustment, I.e., those performance settings knobs which may be adjusted down to provide the most impact on power consumption for the least cost on user experience.

For example, adjusting the eye buffer resolution may have a high impact on reducing power consumption by the GPU and the DRAM memory system (with minimal impact on user experience) while having essentially no impact on power consumption by the CPU. As such, in a given scenario wherein there is a high risk of a thermal event in the near future, and the GPU is the most thermally aggressive active component in a VR use case, embodiments of the solution may elect to adjust down the eye buffer resolution, thereby reducing power consumption by the GPU (and, by extension, lowering thermal energy generation in the system) without affecting the ability of the CPU to efficiently process a timewarp workload that directly affects the m/pl ratio.

Similarly, in a scenario wherein the PLE module 114 determines that the risk of a thermal event is low, embodiments of the solution may elect to adjust down the textures level of detail, thereby modestly reducing power consumption by the GPU and memory 112 (with almost no perceivable impact on user experience) without affecting the CPU's ability to process its workloads. In this way, an embodiment of the solution may further lower the probability of a thermal event without significant impact on user experience with the active immersive multimedia content.

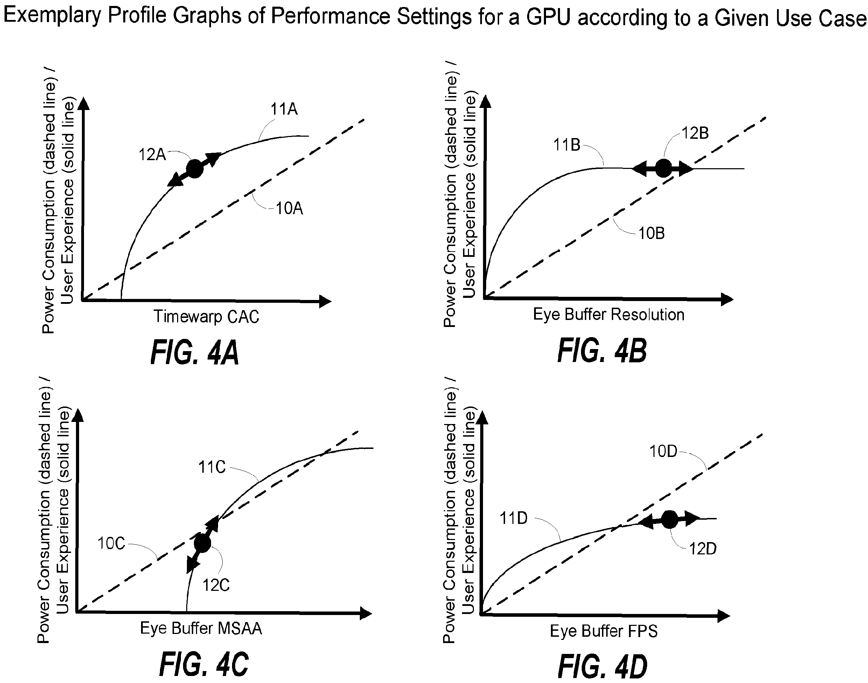

FIGs. 4A-4D illustrate exemplary profile graphs of an exemplary GPU processing component 182 for a given immersive multimedia use case, each illustrating a relationship between a performance setting, user experience relative to the setting, and power consumption associated with the setting. Profile graphs, or similarly indicative data, for each potentially thermally aggressive component in a system 102 may be stored in LUT 29 or simply measured in real-time by sensors 157 and provided to PLE module 114.

Referring back to the example above relative to the description of record 300 in FIG. 3, in a given scenario wherein there is a high risk of a thermal event in the near future, and the GPU is the most thermally aggressive active component in a VR use case, embodiments of the solution may elect to adjust down the eye buffer resolution, thereby reducing power consumption by the GPU (and, by extension, lowering thermal energy generation in the system) without affecting the ability of the CPU to efficiently process a timewarp workload that directly affects the m/pl ratio. Such election may be determined based on the performance setting graph illustrated in FIG. 4B, for example, which may be leveraged by the PLE module 114 to determine that the active setting of the eye buffer resolution may be reduced significantly, thereby saving power, without any significant impact on user experience.

Notably, it will be understood that the profile graphs in FIGs. 4A-4D are representative of empirically collected data and, as such, may exist in a query table form in a memory component 112. As one of ordinary skill in the art would recognize, data instantiated in a table may be represented in a graphical form, such as shown in the FIGs. 4A-4D. Accordingly, for best understanding, the exemplary data of FIGs. 4A-4D are depicted and described as profile graphs to better visually illustrate the relationship of performance settings for active components (the GPU in FIGs. 4A-4D) in a VR use case to a power consumption level and user experience.

Referring to FIG. 4A, moving left to right along the x-axis of the graph represents an increase in the power consumption required by the GPU to process a VR workload portion attributable to timewarp related chromatic aberration correction. As one of ordinary skill in the art will recognize, an increase in the timewarp CAC setting requires an increase in the power consumed (which also correlates to an increase in thermal energy generation) by the GPU 182 processing component. That is, the more precise the timewarp CAC setting, the higher the power level required in order to process its related workload. Accordingly, moving upward along the y-axis represents an increase in power consumption and the dashed line 10A represents the correlation between timewarp CAC and power consumption, as is understood by one of ordinary skill in the art.

In the FIG. 4A graph, the y-axis may also represent a user experience ("Ux") level where moving upward along the y-axis correlates with an improved Ux. Accordingly, as represented by the solid line curve 11A, there is a correlation between the timewarp CAC setting and the Ux level. For the most part, as one of ordinary skill in the art will recognize, a more precise timewarp CAC setting is favorable to a VR user over a lesser setting. Referring to the curve 11A, the initially steep slope of the curve 11A illustrates that an increase in the timewarp CAC setting from a relatively low level may produce a significant increase in Ux. By contrast, the upper portion of the slope 11A which corresponds to higher timewarp CAC setting illustrates that further increases in the setting will not produce noticeable increases in Ux levels once the timewarp CAC setting is already relatively high. That is, the user may not notice or appreciate the increased timewarp CAC setting level and, as such, an increase in the setting will only increase power consumption and will not improve Ux.

With the above in mind, one of ordinary skill in the art will recognize that an increase or decrease in the timewarp CAC setting, when the timewarp CAC setting is initially relatively low, will generate a larger impact on Ux per watt of power consumption than when the initial timewarp CAC setting is initially relatively high. For example, the point 12A represents an exemplary initial timewarp CAC setting that is neither high nor low, i.e. the GPU is processing a portion of a VR workload associated with a moderate timewarp CAC setting. As such, the slope of a tangent to curve 11A at point 12A indicates that an adjustment down in the timewarp CAC setting will generate moderate power savings (thus saving moderate amounts of thermal energy generation) while moderately impacting Ux. Similarly, an adjustment up in the timewarp CAC setting will require a moderate increase in power consumption (thus a moderate increase in thermal energy generation) while providing a positive, though moderate, impact on Ux.

Referring to FIG. 4B, moving left to right along the x-axis of the graph represents an increase in the power consumption required by the GPU to process a VR workload portion attributable to eye buffer resolution. As one of ordinary skill in the art will recognize, an increase in the eye buffer resolution requires an increase in the power consumed (which also correlates to an increase in thermal energy generation) by the GPU component. Accordingly, moving upward along the y-axis represents an increase in power consumption and the dashed line 10B represents the correlation between the eye buffer resolution setting and power consumption, as is understood by one of ordinary skill in the art.

In the FIG. 4B graph, the y-axis may also represent a user experience ("Ux") level where moving upward along the y-axis correlates with an improved Ux. Accordingly, as represented by the solid line curve 11B, there is a correlation between the eye buffer resolution setting and the Ux level. Referring to the curve 11B, the initially steep slope of the curve 11B illustrates that an increase in the eye buffer resolution setting from a relatively low level may produce a significant increase in Ux. By contrast, the flatter portion of the slope 11B which corresponds to higher eye buffer resolution settings illustrates that further increases in eye buffer resolution will not produce noticeable increases in Ux levels once the eye buffer resolution setting is already relatively high.

With the above in mind, one of ordinary skill in the art will recognize that an increase or decrease in the eye buffer resolution setting, when the setting is initially relatively low, will generate a larger impact on Ux per watt of power consumption than when the setting is initially relatively high. For example, the point 12B represents an exemplary initial eye buffer resolution setting that is relatively high, i.e. the GPU is processing a portion of a VR workload associated with a high eye buffer resolution setting. As such, the slope of a tangent to curve 11B at point 12B is relatively flat and indicates that an adjustment down in the eye buffer resolution setting will generate power savings (thus lowering thermal energy generation) without significant impact to Ux. Similarly, an adjustment up in the eye buffer resolution setting will require increased power consumption (thus increased thermal energy generation) without a positive impact on Ux.

Referring to FIG. 4C, moving left to right along the x-axis of the graph represents an increase in the power consumption required by the GPU to process a VR workload portion attributable to eye buffer MSAA. As one of ordinary skill in the art will recognize, an increase in the eye buffer MSAA setting requires an increase in the power consumed (which also correlates to an increase in thermal energy generation) by the GPU. That is, the higher the eye buffer MSAA setting, the higher the power level required in order to process its related workload. Accordingly, moving upward along the y-axis represents an increase in power consumption and the dashed line 10C represents the correlation between processing capacity and power consumption, as is understood by one of ordinary skill in the art.

In the FIG. 4C graph, the y-axis may also represent a Ux level where moving upward along the y-axis correlates with an improved Ux. Accordingly, as represented by the solid line curve 11C, there is a correlation between the eye buffer MSAA setting and the Ux level. Referring to the curve 11C, the initially steep slope of the curve 11C illustrates that an increase in the eye buffer MSAA setting from a relatively low level may produce a significant increase in Ux. By contrast, the upper portion of the slope 11C which corresponds to higher eye buffer MSAA settings illustrates that further increases in the settings will not produce noticeable increases in Ux levels once the setting is already relatively high. That is, the user may not notice or appreciate the increased eye buffer MSAA setting and, as such, an increase will not improve Ux.

With the above in mind, one of ordinary skill in the art will recognize that an increase or decrease in the eye buffer MSAA setting, when the setting is initially relatively low, will generate a larger impact on Ux per watt of power consumption than when the initial setting is initially relatively high. For example, the point 12C represents an exemplary initial eye buffer MSAA setting that is relatively low. As such, the slope of a tangent to curve 11C at point 12C is relatively steep and indicates that an adjustment down in the eye buffer MSAA setting will generate little power savings (thus saving little thermal energy generation) while significantly impacting Ux detrimentally. Similarly, an adjustment up in the eye buffer MSAA setting will require only a small increase in power consumption (thus a small increase in thermal energy generation) while providing a significant and positive impact on Ux.

Referring to FIG. 4D, moving left to right along the x-axis of the graph represents an increase in the power consumption required by the GPU to process a VR workload portion attributable to eye buffer FPS. As one of ordinary skill in the art will recognize, an increase in the eye buffer FPS setting requires an increase in the power consumed (which also correlates to an increase in thermal energy generation) by the GPU 182 processing component. Accordingly, moving upward along the y-axis represents an increase in power consumption and the dashed line 10D represents the correlation between the eye buffer FPS setting and power consumption, as is understood by one of ordinary skill in the art.

In the FIG. 4D graph, the y-axis may also represent a user experience ("Ux") level where moving upward along the y-axis correlates with an improved Ux. Accordingly, as represented by the solid line curve 11D, there is a correlation between the eye buffer FPS setting and the Ux level. Referring to the curve 11D, the initially steep slope of the curve 11D illustrates that an increase in the eye buffer FPS setting from a very low setting may produce a significant increase in Ux. By contrast, the flatter portion of the slope 11D which corresponds to moderate and high eye buffer FPS settings illustrates that further increases in the setting beyond relatively low levels will not produce noticeable increases in Ux levels.

With the above in mind, one of ordinary skill in the art will recognize that an increase or decrease in the eye buffer FPS setting, when the setting is initially very low, will generate a more appreciable impact on Ux per watt of power consumption than when the initial setting is initially relatively moderate or even high. For example, the point 12D represents an exemplary initial eye buffer FPS setting that is relatively high, i.e. the GPU is processing a portion of a VR workload associated with a high eye buffer FPS setting. As such, the slope of a tangent to curve 11D at point 12D is relatively flat and indicates that an adjustment down in the eye buffer FPS setting will generate power savings (thus lowering thermal energy generation) without significant impact to Ux. Similarly, an adjustment up in the eye buffer FPS setting will require increased power consumption (thus increased thermal energy generation) with no noticeable impact on Ux.

Based on profile graph performance settings, the system and method systematically adjust one or more performance settings to optimize Ux in a VR use case while adjusting overall power consumption to avoid a thermal event. As a non-limiting example, the performance settings of the various components active according to a VR gaming use case collectively contribute to an overall Ux level and an overall power consumption level associated with the use case. As explained above, an increase or decrease in the active setting for any portion of the VR workload may affect both overall Ux and overall power consumption depending on which one or more processing components may be affected by the setting. Advantageously, in the event that power consumption should be increased or decreased, the present invention seeks to make such power consumption adjustments (and, by extension, thermal energy generation adjustments) in a manner that optimizes Ux without causing a thermal event that could trigger frame drops and/or FPS reduction.

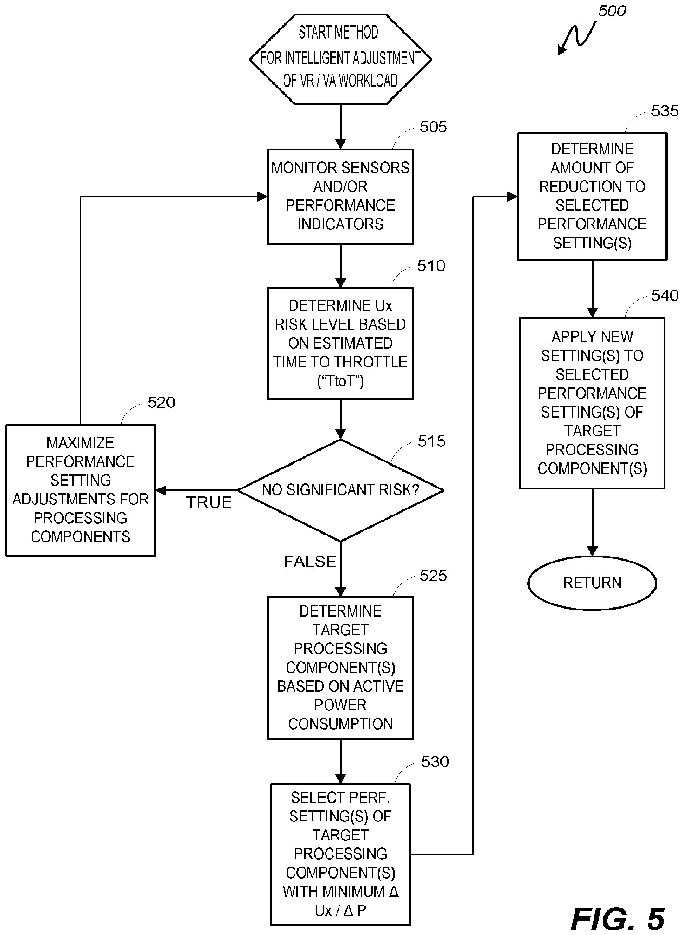

FIG. 5 depicts a logical flowchart illustrating a method 500 for intelligent management of an immersive multimedia workload in a portable computing device ("PCD") via selective adjustments of component performance settings to avoid frame drops and/or detrimental frame rate reduction. Beginning at block 505, sensors 157 and/or performance indicators (e.g., motion to photon latency) are monitored to identify, among other things, a likely thermal event that could trigger implementation of a thermal mitigation policy. At block 510, a risk level is determined based on an estimated time to throttle ("TtoT"). Notably, the TtoT calculation is translated into a number of frames (based on FPS rate) before the thermal throttling becomes necessary if performance settings of the thermally aggressive processing components remain unadjusted.

Next, at decision block 515, the risk level is assessed. If the risk level is low or nonexistent, the "true" branch may be followed to block 520 and the performance settings of the various processing components for the active VR use case increased or maximized. In this way, if the risk of a thermal event is insignificant, the Ux may be optimized by increasing the performance settings of some or all processing components to render a maximum QoS. If the risk level is high, the method 500 follows the "false" branch to block 525.

At block 525, power rail measurements are leveraged to identify which one or more of the processing components are most thermally aggressive. Then, at block 530 performance settings associated with the identified thermally aggressive components are selected based on those settings which are adjusted to provide for the most power savings and least impact on Ux. At blocks 535 and 540, the selected performance settings are reduced at a time based on the ToT calculation so as to maximize the number of frames that are rendered to the user without performance setting adjustment. In this way, the VR workload portions allocated to the most thermally aggressive processing components may be strategically reduced such that the likelihood of a thermal event that causes frame drops or FPS rate reductions is avoided. The method 500 returns.

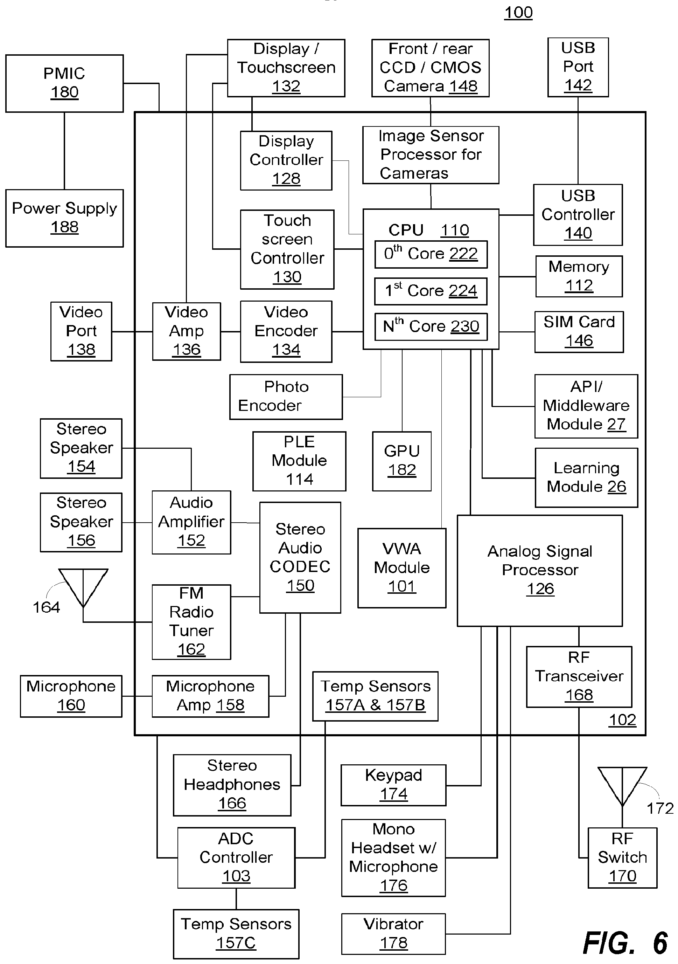

FIG. 6 is a functional block diagram illustrating an exemplary, non-limiting aspect of the PCD 100 of FIGs. 1 and 2 in the form of a wireless telephone for implementing methods and systems for intelligent management of an immersive multimedia workload. As shown, the PCD 100 includes an on-chip system 102 that includes a multi-core central processing unit ("CPU") 110 and an analog signal processor 126 that are coupled together. The CPU 110 may comprise a zeroth core 222, a first core 224, and an Nth core 230 as understood by one of ordinary skill in the art. Further, instead of a CPU 110, a digital signal processor ("DSP") may also be employed as understood by one of ordinary skill in the art.

In general, the PLE module 114, API/Middleware module 27 and VWA module 101 may be collectively responsible for selecting and making adjustments to performance settings associated with active processing components according to a given VR use case, such as GPU 182, such that power consumption (and, by extension, thermal energy generation) is managed and user experience for the immersive multimedia use case is optimized.

The PLE module 114 may communicate with multiple operational sensors (e.g., thermal sensors, power sensors 157A, 157B) distributed throughout the on-chip system 102 and with the CPU 110 of the PCD 100 as well as with the VWA module 101. In some embodiments, PLE module 114 may also monitor skin temperature sensors 157C for temperature readings associated with a touch temperature and/or ambient temperature of PCD 100. In other embodiments not covered by the claims, PLE module 114 may infer touch temperatures based on a likely delta with readings taken by on-chip temperature sensors 157. The VWA module 101 may work with the PLE module 114 to identify temperature thresholds and/or power budgets that could be exceeded and instruct the application of performance settings 28 adjustments associated with power consuming components within chip 102 in an effort to avoid a thermal event without unnecessarily impacting user experience for the immersive multimedia use case.

As illustrated in FIG. 6, a display controller 128 and a touch screen controller 130 are coupled to the digital signal processor 110. A touch screen display 132 external to the on-chip system 102 is coupled to the display controller 128 and the touch screen controller 130. PCD 100 may further include a video encoder 134, e.g., a phasealternating line ("PAL") encoder, a sequential couleur avec memoire ("SECAM") encoder, a national television system(s) committee ("NTSC") encoder or any other type of video encoder 134. The video encoder 134 is coupled to the multi-core central processing unit ("CPU") 110. A video amplifier 136 is coupled to the video encoder 134 and the touch screen display 132. A video port 138 is coupled to the video amplifier 136. As depicted in FIG. 6, a universal serial bus ("USB") controller 140 is coupled to the CPU 110. Also, a USB port 142 is coupled to the USB controller 140. A memory 112 and a subscriber identity module (SIM) card 146 may also be coupled to the CPU 110. Further, as shown in FIG. 6, a digital camera 148 may be coupled to the CPU 110. In an exemplary aspect, the digital camera 148 is a charge-coupled device ("CCD") camera or a complementary metal-oxide semiconductor ("CMOS") camera.

As further illustrated in FIG. 6, a stereo audio CODEC 150 may be coupled to the analog signal processor 126. Moreover, an audio amplifier 152 may be coupled to the stereo audio CODEC 150. In an exemplary aspect, a first stereo speaker 154 and a second stereo speaker 156 are coupled to the audio amplifier 152. FIG. 6 shows that a microphone amplifier 158 may also be coupled to the stereo audio CODEC 150. Additionally, a microphone 160 may be coupled to the microphone amplifier 158. In a particular aspect, a frequency modulation ("FM") radio tuner 162 may be coupled to the stereo audio CODEC 150. Also, an FM antenna 164 is coupled to the FM radio tuner 162. Further, stereo headphones 166 may be coupled to the stereo audio CODEC 150.

FIG. 6 further indicates that a radio frequency ("RF") transceiver 168 may be coupled to the analog signal processor 126. An RF switch 170 may be coupled to the RF transceiver 168 and an RF antenna 172. As shown in FIG. 6, a keypad 174 may be coupled to the analog signal processor 126. Also, a mono headset with a microphone 176 may be coupled to the analog signal processor 126. Further, a vibrator device 178 may be coupled to the analog signal processor 126. FIG. 6 also shows that a power supply 188, for example a battery, is coupled to the on-chip system 102 through power management integrated circuit ("PMIC') 180. In a particular aspect, the power supply includes a rechargeable DC battery or a DC power supply that is derived from an alternating current ("AC") to DC transformer that is connected to an AC power source.

The CPU 110 may also be coupled to one or more internal, on-chip thermal sensors 157A as well as one or more external, off-chip thermal sensors 157C. The on-chip thermal sensors 157A may comprise one or more proportional to absolute temperature ("PTAT") temperature sensors that are based on vertical PNP structure and are usually dedicated to complementary metal oxide semiconductor ("CMOS") very large-scale integration ("VLSI") circuits. The off-chip thermal sensors 157C may comprise one or more thermistors. The thermal sensors 157C may produce a voltage drop that is converted to digital signals with an analog-to-digital converter ("ADC") controller 103. However, other types of thermal sensors 157A, 157C may be employed without departing from the scope of the invention.

The learning module(s) 26, PLE module(s) 114 and/or VWA module(s) 101 may comprise software which is executed by the CPU 110. However, the learning module(s) 26, PLE module(s) 114 and/or VWA module(s) 101 may also be formed from hardware and/or firmware without departing from the scope of the invention. The learning module 26, PLE module 114 and/or VWA module 101 may be collectively responsible for selecting and making adjustments to performance settings associated with active processing components in a given VR use case such that power consumption (and, by extension, thermal energy generation) is managed to avoid frame drops or reduction in FPS rates and user experience is optimized.

The touch screen display 132, the video port 138, the USB port 142, the camera 148, the first stereo speaker 154, the second stereo speaker 156, the microphone 160, the FM antenna 164, the stereo headphones 166, the RF switch 170, the RF antenna 172, the keypad 174, the mono headset 176, the vibrator 178, the power supply 188, the PMIC 180 and the thermal sensors 157C are external to the on-chip system 102. However, it should be understood that the PLE module 114 may also receive one or more indications or signals from one or more of these external devices by way of the analog signal processor 126 and the CPU 110 to aid in the real time management of the resources operable on the PCD 100.

In a particular aspect, one or more of the method steps described herein are implemented by executable instructions and parameters stored in the memory 112 that form the one or more learning module(s) 26, PLE module(s) 114 and/or VWA module(s) 101. These instructions that form the module(s) 101, 114, 101 are executed by the CPU 110, the analog signal processor 126, or another processor, in addition to the ADC controller 103 to perform the methods described herein. Further, the processors 110, 126, the memory 112, the instructions stored therein, or a combination thereof serve as means for performing one or more of the method steps described herein.

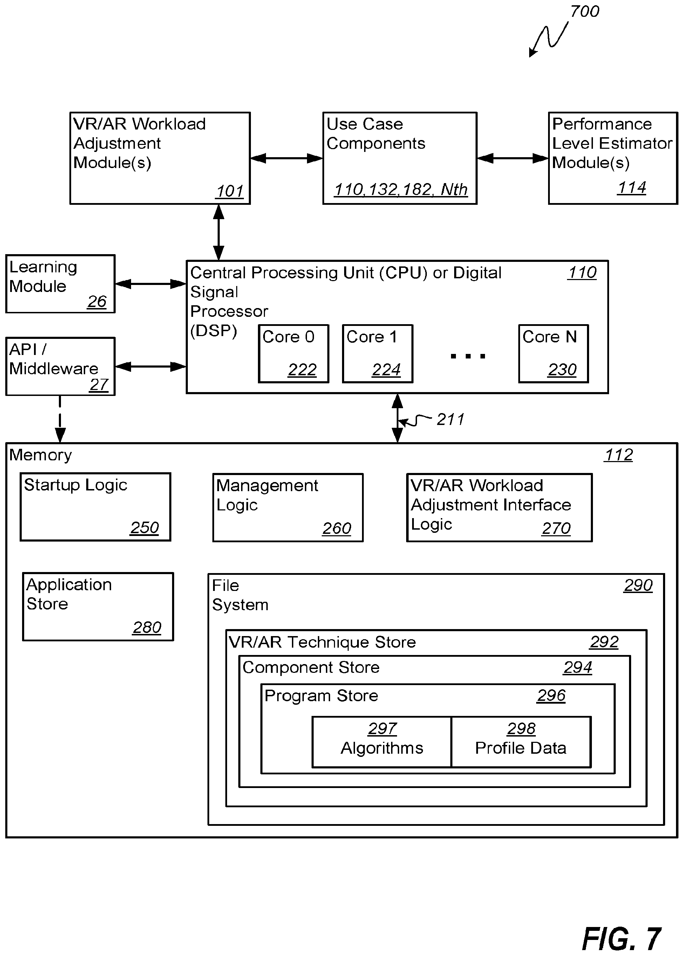

FIG. 7 is a schematic diagram illustrating an exemplary software architecture 700 of the PCD of FIG. 6 for intelligent management of an immersive multimedia workload. Any number of algorithms may form or be part of at least one intelligent thermal power management policy that may be applied by the learning module(s) 26, PLE module(s) 114 and/or VWA module(s) 101 when certain thermal conditions are met, however, in a preferred embodiment the learning module(s) 26, PLE module(s) 114 and/or VWA module(s) 101 work together to adjust performance settings 28 of active processing components in a VR use case including, but not limited to, LCD display 132, GPU 182, CPU 110 and the memory subsystem 112 (e.g., DDR).

As illustrated in FIG. 7, the CPU or digital signal processor 110 is coupled to the memory 112 via a bus 211. The CPU 110, as noted above, is a multiple-core processor having N core processors. That is, the CPU 110 includes a first core 222, a second core 224, and an N^{th} core 230. As is known to one of ordinary skill in the art, each of the first core 222, the second core 224 and the N^{th} core 230 are available for supporting a dedicated application or program. Alternatively, one or more applications or programs can be distributed for processing across two or more of the available cores.

The CPU 110 may receive commands from the learning module(s) 26, PLE module(s) 114 and/or VWA module(s) 101 that may comprise software and/or hardware. If embodied as software, the module(s) 26, 114, 101 comprise instructions that are executed by the CPU 110 that issues commands to other application programs being executed by the CPU 110 and other processors.

The first core 222, the second core 224 through to the Nth core 230 of the CPU 110 may be integrated on a single integrated circuit die, or they may be integrated or coupled on separate dies in a multiple-circuit package. Designers may couple the first core 222, the second core 224 through to the N^{th} core 230 via one or more shared caches and they may implement message or instruction passing via network topologies such as bus, ring, mesh and crossbar topologies.

Bus 211 may include multiple communication paths via one or more wired or wireless connections, as is known in the art. The bus 211 may have additional elements, which are omitted for simplicity, such as controllers, buffers (caches), drivers, repeaters, and receivers, to enable communications. Further, the bus 211 may include address, control, and/or data connections to enable appropriate communications among the aforementioned components.

When the logic used by the PCD 100 is implemented in software, as is shown in FIG. 7, it should be noted that one or more of startup logic 250, management logic 260, VR/AR workload adjustment interface interface logic 270, applications in application store 280 and portions of the file system 290 may be stored on any computer-readable medium (or device) for use by, or in connection with, any computer-related system or method.

In the context of this document, a computer-readable medium is an electronic, magnetic, optical, or other physical device or means that can contain or store a computer program and data for use by or in connection with a computer-related system or method. The various logic elements and data stores may be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device.

The computer-readable medium can be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection (electronic) having one or more wires, a portable computer diskette (magnetic), a random-access memory (RAM) (electronic), a double data rate memory (DDR) (electronic), a read-only memory (ROM) (electronic), an erasable programmable read-only memory (EPROM, EEPROM, or Flash memory) (electronic), an optical fiber (optical), and a portable compact disc read-only memory (CDROM) (optical). Note that the computer-readable medium could even be paper or another suitable medium upon which the program is printed, as the program can be electronically captured, for instance via optical scanning of the paper or other medium, then compiled, interpreted or otherwise processed in a suitable manner if necessary, and then stored in a computer memory.

In an alternative embodiment not covered by the claims, where one or more of the startup logic 250, management logic 260 and perhaps the VR/AR workload adjustment interface logic 270 are implemented in hardware, the various logic may be implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

The memory 112 is a non-volatile data storage device such as a flash memory or a solid-state memory device. Although depicted as a single device, the memory 112 may be a distributed memory device with separate data stores coupled to the digital signal processor 110 (or additional processor cores).

The startup logic 250 includes one or more executable instructions for selectively identifying, loading, and executing a select program for managing or controlling the performance of one or more of the available cores such as the first core 222, the second core 224 through to the N^{th} core 230. The startup logic 250 may identify, load and execute a select program based on the comparison, by the PLE module 114, of various temperature measurements or power consumption levels with threshold temperature settings or power budget settings associated with an active processing component or aspect. An exemplary select program can be found in the program store 296 of the embedded file system 290 and is defined by a specific combination of an intelligent VR/AR workload adjustment algorithm 297 and a set of profile graphs 298. The exemplary select program, when executed by one or more of the core processors in the CPU 110 may operate in accordance with one or more signals provided by the PLE module 114 in combination with control signals provided by the VWA module(s) 101 to adjust the performance setting associated with a particular active component "up" or "down."

The management logic 260 includes one or more executable instructions for terminating an intelligent VR/AR workload adjustment program, as well as selectively identifying, loading, and executing a more suitable replacement program. The management logic 260 is arranged to perform these functions at run time or while the PCD 100 is powered and in use by an operator of the device. A replacement program can be found in the program store 296 of the embedded file system 290 and, in some embodiments, may be defined by a specific combination of an intelligent VR/AR workload adjustment algorithm 297 and a set of profile graphs 298.

The replacement program, when executed by one or more of the core processors in the digital signal processor may operate in accordance with one or more signals provided by the PLE module 114 / VWA module 101 or one or more signals provided on the respective control inputs of the various processor cores to adjust the settings of one or more performance settings 28 associated with processing components 132, 182, 110, 112 and Nth.

The interface logic 270 includes one or more executable instructions for presenting, managing and interacting with external inputs to observe, configure, or otherwise update information stored in the embedded file system 290. In one embodiment not covered by the claims, the interface logic 270 may operate in conjunction with manufacturer inputs received via the USB port 142. These inputs may include one or more programs to be deleted from or added to the program store 296. Alternatively, the inputs may include edits or changes to one or more of the programs in the program store 296. Moreover, the inputs may identify one or more changes to, or entire replacements of one or both of the startup logic 250 and the management logic 260. By way of example, the inputs may include a change to the component profile graphs associated with a particular processing component in association with a particular use case.

The interface logic 270 enables a manufacturer to controllably configure and adjust an end user's experience under defined operating conditions on the PCD 100. When the memory 112 is a flash memory, one or more of the startup logic 250, the management logic 260, the interface logic 270, the application programs in the application store 280 or information in the embedded file system 290 can be edited, replaced, or otherwise modified. In some embodiments, the interface logic 270 may permit an end user or operator of the PCD 100 to search, locate, modify or replace the startup logic 250, the management logic 260, applications in the application store 280 and information in the embedded file system 290. The operator may use the resulting interface to make changes that will be implemented upon the next startup of the PCD 100. Alternatively, the operator may use the resulting interface to make changes that are implemented during run time.

The embedded file system 290 includes a hierarchically arranged VR/AR technique store 292. In this regard, the file system 290 may include a reserved section of its total file system capacity for the storage of information for the configuration and management of the various profile graphs 298 and algorithms 297 used by the PCD 100. As shown in FIG. 7, the store 292 includes a component store 294, which includes a program store 296, which includes one or more intelligent VR/AR workload adjustment programs.

Certain steps in the processes or process flows described in this specification naturally precede others for the invention to function as described. However, the invention is not limited to the order of the steps described if such order or sequence does not alter the functionality of the invention. That is, it is recognized that some steps may performed before, after, or parallel (substantially simultaneously with) other steps without departing from the scope of the invention. In some instances, certain steps may be omitted or not performed without departing from the invention. Further, words such as "thereafter", "then", "next", etc. are not intended to limit the order of the steps. These words are simply used to guide the reader through the description of the exemplary method.

Additionally, one of ordinary skill in programming is able to write computer code or identify appropriate hardware and/or circuits to implement the disclosed invention without difficulty based on the flow charts and associated description in this specification, for example. Therefore, disclosure of a particular set of program code instructions or detailed hardware devices is not considered necessary for an adequate understanding of how to make and use the invention. The inventive functionality of the claimed computer implemented processes is explained in more detail in the above description and in conjunction with the drawings, which may illustrate various process flows.

In one or more exemplary aspects, the functions described may be implemented in hardware, software, firmware, or any combination thereof. If implemented in software, the functions may be stored on or transmitted as one or more instructions or code on a computer-readable medium. Computer-readable media include both computer storage media and communication media including any medium that facilitates transfer of a computer program from one place to another. A storage media may be any available media that may be accessed by a computer. By way of example, and not limitation, such computer-readable media may comprise RAM, ROM, EEPROM, CD-ROM or other optical disk storage, magnetic disk storage or other magnetic storage devices, or any other medium that may be used to carry or store desired program code in the form of instructions or data structures and that may be accessed by a computer.

Also, any connection is properly termed a computer-readable medium. For example, if the software is transmitted from a website, server, or other remote source using a coaxial cable, fiber optic cable, twisted pair, digital subscriber line ("DSL"), or wireless technologies such as infrared, radio, and microwave, then the coaxial cable, fiber optic cable, twisted pair, DSL, or wireless technologies such as infrared, radio, and microwave are included in the definition of medium.

Disk and disc, as used herein, includes compact disc ("CD"), laser disc, optical disc, digital versatile disc ("DVD"), floppy disk and blu-ray disc where disks usually reproduce data magnetically, while discs reproduce data optically with lasers. Combinations of the above should also be included within the scope of computer-readable media.

Therefore, although selected aspects have been illustrated and described in detail, it will be understood that various substitutions and alterations may be made therein without departing from the scope of the present invention, as defined by the following claims.

## Claims

1. A method (500) for intelligent adjustment of an immersive multimedia workload in a portable computing device, PCD, the method comprising:
monitoring (505) one or more performance indicators comprising a motion to photon latency associated with the immersive multimedia workload;
monitoring (505) one or more thermal sensors, wherein the one or more thermal sensors indicate thermal energy generation in the PCD;
determining (510; 515) a likelihood of a thermal event based on the one or more thermal sensors, wherein determining the likelihood of a thermal event further comprises estimating a time to throttle in units of frames;
identifying (525) a thermally aggressive processing component in the PCD, wherein the thermally aggressive processing component is actively processing a portion of the immersive multimedia workload;
identifying (530) a performance parameter associated with the thermally aggressive processing component, based on the likelihood of a thermal event;
adjusting (540) a setting of the identified performance parameter, wherein adjusting the setting modifies an overall power consumption by the thermally aggressive processing component such that the likelihood of a thermal event is reduced and the motion to photon latency is optimized.

2. The method of claim 1, further comprising monitoring one or more power rails and wherein the thermally aggressive processing component is identified based on power levels of the one or more power rails.

3. The method of claim 1, wherein the identified thermally aggressive processing component is one of a graphical processing unit (182), a central processing unit (110), a display unit (132), and a double data rate memory unit.

4. The method of claim 1, wherein the identified performance parameter is one of eye buffer resolution, eye buffer Multi-Sample Anti-Aliasing, MSAA, timewarp Chromatic Aberration Correction, CAC, eye buffer Frames Per Second, FPS, display FPS, timewarp output resolution, textures Level Of Detail, LOD, Six Degrees Of Freedom, 6DOF, camera FPS, and fovea size.

5. The method of claim 1, wherein the likelihood of a thermal event is insignificant and adjusting the setting of the identified performance parameter comprises increasing the setting.

6. The method of claim 1, wherein adjusting a setting of the identified performance parameter comprises timing the adjustment based on the estimated time to throttle.

7. The method of claim 1, wherein the PCD is in the form of a wireless telephone.

8. A computer system (100; 102; 700) for intelligent adjustment of an immersive multimedia workload in a portable computing device, PCD, the system comprising:
means (114) for monitoring one or more performance indicators comprising a motion to photon latency associated with the immersive multimedia workload;
means (114) for monitoring one or more thermal sensors, wherein the one or more thermal sensors are configured to indicate thermal energy generation in the PCD;
means for determining a likelihood of a thermal event based on the one or more thermal sensors, wherein means for determining the likelihood of a thermal event 2. further comprises means for estimating a time to throttle in units of frames;
means for identifying a thermally aggressive processing component in the PCD, wherein the thermally aggressive processing component is actively processing a portion of the immersive multimedia workload;
means for identifying a performance parameter associated with the thermally aggressive processing component, based on the likelihood of a thermal event;
means (101) for adjusting a setting of the identified performance parameter, wherein adjusting the setting modifies an overall power consumption by the thermally aggressive processing component such that the likelihood of a thermal event is reduced and the motion to photon latency is optimized.

9. The computer system of claim 8, further comprising means for monitoring one or more power rails and wherein the thermally aggressive processing component is identified based on power levels of the one or more power rails.

10. The computer system of claim 8, wherein the identified thermally aggressive processing component is one of a graphical processing unit, a central processing unit, a display unit, and a double data rate memory unit.

11. The computer system of claim 8, wherein the identified performance parameter is one of eye buffer resolution, eye buffer MSAA, timewarp CAC, eye buffer FPS, display FPS, timewarp output resolution, textures LOD, 6DOF camera FPS, and fovea size.

12. The computer system of claim 8, wherein the likelihood of a thermal event is insignificant and adjusting the setting of the identified performance parameter comprises increasing the setting.

13. The computer system of claim 8, wherein means for adjusting a setting of the identified performance parameter comprises means for timing the adjustment based on the estimated time to throttle.

14. The computer system of claim 8, wherein the PCD is in the form of a wireless telephone.

15. A computer program comprising instructions, which when executed on a computer system as in any of the claims 8 to 14, cause said system to carry out the method of any of claims 1 to 7.

## Patentansprüche

1. Verfahren (500) zur intelligenten Anpassung einer immersiven Multimedia-Arbeitslast in einer tragbaren Rechenvorrichtung, PCD, wobei das Verfahren Folgendes umfasst:
Überwachen (505) eines oder mehrerer Leistungsindikatoren, die eine Bewegung-zu-Photon-Latenz umfassen, die mit der immersiven Multimedia-Arbeitslast verbunden ist;
Überwachen (505) eines oder mehrerer thermischer Sensoren, wobei der eine oder die mehreren thermischen Sensoren eine thermische Energieerzeugung in der PCD anzeigen;
Bestimmen (510; 515) einer Wahrscheinlichkeit eines thermischen Ereignisses basierend auf dem einen oder den mehreren thermischen Sensoren, wobei das Bestimmen der Wahrscheinlichkeit eines thermischen Ereignisses ferner das Schätzen einer Zeit bis zur Drosselung in Einheiten von Frames umfasst;
Identifizieren (525) einer thermisch aggressiven Verarbeitungskomponente in der PCD, wobei die thermisch aggressive Verarbeitungskomponente aktiv einen Teil der immersiven Multimedia-Arbeitslast verarbeitet;
Identifizieren (530) eines Leistungsparameters, der mit der thermisch aggressiven Verarbeitungskomponente verbunden ist, basierend auf der Wahrscheinlichkeit eines thermischen Ereignisses;
Anpassen (540) einer Einstellung des identifizierten Leistungsparameters, wobei das Anpassen der Einstellung eine Gesamtleistungsaufnahme durch die thermisch aggressive Verarbeitungskomponente modifiziert, so dass die Wahrscheinlichkeit eines thermischen Ereignisses reduziert und die Bewegung-zu-Photon-Latenz optimiert wird.

2. Verfahren nach Anspruch 1, ferner umfassend das Überwachen einer oder mehrerer Stromschienen, und wobei die thermisch aggressive Verarbeitungskomponente auf der Grundlage von Leistungspegeln der einen oder mehreren Stromschienen identifiziert wird.

3. Verfahren nach Anspruch 1, wobei es sich bei der identifizierten thermisch aggressiven Verarbeitungskomponente um eine grafische Verarbeitungseinheit (182), eine zentrale Verarbeitungseinheit (110), eine Anzeigeeinheit (132) oder eine Speichereinheit mit doppelter Datenrate handelt.

4. Verfahren nach Anspruch 1, wobei der identifizierte Leistungsparameter einer der folgenden ist: Augenpufferauflösung, Augenpuffer-Multi-Sample-Anti-Aliasing, MSAA, Timewarp-Chromatische-Aberrations-Korrektur, CAC, Augenpuffer-Bilder pro Sekunde, FPS, Anzeige-FPS, Timewarp-Ausgangsauflösung, Textur-Detailstufe, LOD, Sechs Freiheitsgrade, 6DOF, Kamera-FPS und Fovea-Größe.

5. Verfahren nach Anspruch 1, wobei die Wahrscheinlichkeit eines thermischen Ereignisses unbedeutend ist und das Anpassen der Einstellung des identifizierten Leistungsparameters das Erhöhen der Einstellung umfasst.

6. Verfahren nach Anspruch 1, wobei das Anpassen einer Einstellung des identifizierten Leistungsparameters das zeitliche Abstimmen der Anpassung auf der Grundlage der geschätzten Zeit bis zur Drosselung umfasst.

7. Verfahren nach Anspruch 1, wobei die PCD in Form eines drahtlosen Telefons vorliegt.

8. Computersystem (100; 102; 700) zur intelligenten Anpassung einer immersiven Multimedia-Arbeitslast in einer tragbaren Rechenvorrichtung, PCD, wobei das System umfasst:
Mittel (114) zum Überwachen eines oder mehrerer Leistungsindikatoren, die eine Bewegung-zu-Photon-Latenz umfassen, die mit der immersiven Multimedia-Arbeitslast verbunden ist;
Mittel (114) zum Überwachen eines oder mehrerer thermischer Sensoren, wobei der eine oder die mehreren thermischen Sensoren konfiguriert sind, um die Erzeugung thermischer Energie in der PCD anzuzeigen;
Mittel zum Bestimmen einer Wahrscheinlichkeit eines thermischen Ereignisses basierend auf dem einen oder den mehreren thermischen Sensoren, wobei das Mittel zum Bestimmen der Wahrscheinlichkeit eines thermischen Ereignisses ferner Mittel zum Schätzen einer Zeit bis zur Drosselung in Einheiten von Frames umfasst;
Mittel zum Identifizieren einer thermisch aggressiven Verarbeitungskomponente in der PCD, wobei die thermisch aggressive Verarbeitungskomponente aktiv einen Teil der immersiven Multimedia-Arbeitslast verarbeitet;
Mittel zum Identifizieren eines Leistungsparameters, der mit der thermisch aggressiven Verarbeitungskomponente verbunden ist, basierend auf der Wahrscheinlichkeit eines thermischen Ereignisses;
Mittel (101) zum Anpassen einer Einstellung des identifizierten Leistungsparameters, wobei das Anpassen der Einstellung eine Gesamtleistungsaufnahme durch die thermisch aggressive Verarbeitungskomponente modifiziert, so dass die Wahrscheinlichkeit eines thermischen Ereignisses reduziert und die Bewegung-zu-Photon-Latenz optimiert wird.

9. Computersystem nach Anspruch 8, ferner umfassend Mittel zum Überwachen einer oder mehrerer Stromschienen, und wobei die thermisch aggressive Verarbeitungskomponente auf der Grundlage von Leistungspegeln der einen oder mehreren Stromschienen identifiziert wird.

10. Computersystem nach Anspruch 8, wobei es sich bei der identifizierten thermisch aggressiven Verarbeitungskomponente um eine grafische Verarbeitungseinheit, eine zentrale Verarbeitungseinheit, eine Anzeigeeinheit oder eine Speichereinheit mit doppelter Datenrate handelt.

11. Computersystem nach Anspruch 8, wobei der identifizierte Leistungsparameter einer der folgenden ist: Augenpufferauflösung, Augenpuffer-MSAA, Timewarp-CAC, Augenpuffer-FPS, Anzeige-FPS, Timewarp-Ausgangsauflösung, Textur-LOD, 6DOF-Kamera-FPS und Fovea-Größe.

12. Computersystem nach Anspruch 8, wobei die Wahrscheinlichkeit eines thermischen Ereignisses unbedeutend ist und das Anpassen der Einstellung des identifizierten Leistungsparameters das Erhöhen der Einstellung umfasst.

13. Computersystem nach Anspruch 8, wobei das Mittel zum Anpassen einer Einstellung des identifizierten Leistungsparameters Mittel zum zeitlichen Abstimmen der Anpassung auf der Grundlage der geschätzten Zeit bis zur Drosselung umfasst.

14. Computersystem nach Anspruch 8, wobei die PCD in Form eines drahtlosen Telefons vorliegt.

15. Computerprogramm mit Befehlen, die, wenn sie auf einem Computersystem nach einem der Ansprüche 8 bis 14 ausgeführt werden, das System veranlassen, das Verfahren nach einem der Ansprüche 1 bis 7 auszuführen.

## Revendications

1. Un procédé (500) pour un ajustement intelligent d'une charge de travail multimedia immersive dans un dispositif informatique portable, PCD, le procédé comprenant :
la surveillance (505) d'un ou plusieurs indicateurs de performance comprenant une latence entre mouvement et photon associée à la charge de travail multimedia immersive ;
la surveillance (505) d'un ou plusieurs capteurs thermiques, dans lequel les un ou plusieurs capteurs thermiques indiquent une génération d'énergie thermique dans le PCD;
la détermination (510 ; 515) d'une probabilité d'un événement thermique sur la base des un ou plusieurs capteurs thermiques, dans lequel la détermination de la probabilité d'un événement thermique comprend en outre l'estimation d'un temps d'accélérateur en unités d'images ;
l'identification (525) d'un composant de traitement thermiquement agressif dans le PCD, dans lequel le composant de traitement thermiquement agressif traite activement une partie de la charge de travail multimedia immersive ;
l'identification (530) d'un paramètre de performance associé au composant de traitement thermiquement agressif, sur la base de la probabilité d'un événement thermique ;
l'ajustement (540) d'un réglage du paramètre de performance identifié, dans lequel l'ajustement du réglage modifie une consommation de puissance globale par le composant de traitement thermiquement agressif, de sorte que la probabilité d'un événement thermique soit réduite et que la latence entre mouvement et photon soit optimisée.

2. Le procédé selon la revendication 1, comprenant en outre la surveillance d'une ou plusieurs lignes d'alimentation et dans lequel le composant de traitement thermiquement agressif est identifié sur la base de niveaux de puissance des une ou plusieurs lignes d'alimentation.

3. Le procédé selon la revendication 1, dans lequel le composant de traitement thermiquement agressif identifié est l'une parmi une unité de traitement graphique (182), une unité centrale de traitement (110), une unité d'affichage (132), et une unité de mémoire à double débit de données.

4. Le procédé selon la revendication 1, dans lequel le paramètre de performance identifié est l'un parmi une résolution de tampon oculaire, un anticrénelage multi échantillon, MSAA, du tampon oculaire, une correction de l'aberration chromatique, CAC, d'alignement temporel, des images par seconde, FPS, du tampon oculaire, des FPS d'affichage, une résolution de sortie d'alignement temporel, un niveau de détail, LOD, de textures, des FPS de caméra à six degrés de liberté, 6DOF, et une taille de fovea.

5. Le procédé selon la revendication 1, dans lequel la probabilité d'un événement thermique est insignifiante et l'ajustement du réglage du paramètre de performance identifié comporte l'augmentation du réglage.

6. Le procédé selon la revendication 1, dans lequel l'ajustement d'un réglage du paramètre de performance identifié comprend le séquencement de l'ajustement sur la base du temps d'accélérateur estimé.

7. Le procédé selon la revendication 1, dans lequel le PCD se présente sous la forme d'un téléphone sans fil.

8. Un système informatique (100 ; 102 ; 700) pour un ajustement intelligent d'une charge de travail multimedia immersive dans un dispositif informatique portable, PCD, le système comprenant :
un moyen (114) pour surveiller un ou plusieurs indicateurs de performance comprenant une latence entre mouvement et photon associée à la charge de travail multimedia immersive ;
un moyen (114) pour surveiller un ou plusieurs capteurs thermiques, dans lequel les un ou plusieurs capteurs thermiques sont configurés pour indiquer la génération d'énergie thermique dans le PCD ;
un moyen pour déterminer une probabilité d'un événement thermique sur la base des un ou plusieurs capteurs thermiques, dans lequel un moyen pour déterminer la probabilité d'un événement thermique comprend en outre un moyen pour estimer un temps d'accélérateur en unités d'images ;
un moyen pour identifier un composant de traitement thermiquement agressif dans le PCD, dans lequel le composant de traitement thermiquement agressif traite activement une partie de la charge de travail multimedia immersive ;
un moyen pour identifier un paramètre de performance associé au composant de traitement thermiquement agressif, sur la base de la probabilité d'un événement thermique ;
un moyen (101) pour ajuster un réglage du paramètre de performance identifié, dans lequel l'ajustement du réglage modifie une consommation de puissance globale par le composant de traitement thermiquement agressif, de sorte que la probabilité d'un événement thermique soit réduite et que la latence entre mouvement et photon soit optimisée.

9. Le système informatique selon la revendication 8, comprenant en outre un moyen pour surveiller une ou plusieurs lignes d'alimentation et dans lequel le composant de traitement thermiquement agressif est identifié sur la base de niveaux de puissance des une ou plusieurs lignes d'alimentation.

10. Le système informatique selon la revendication 8, dans lequel le composant de traitement thermiquement agressif identifié est l'une parmi une unité de traitement graphique, une unité centrale de traitement, une unité d'affichage, et une unité de mémoire à double débit de données.

11. Le système informatique selon la revendication 8, dans lequel le paramètre de performance identifié est l'un parmi une résolution de tampon oculaire, un MSAA du tampon oculaire, une CAC d'alignement temporel, des FPS du tampon oculaire, des FPS d'affichage, une résolution de sortie d'alignement temporel, un LOD de textures, des FPS de caméra 6DOF, et une taille de fovéa.

12. Le système informatique selon la revendication 8, dans lequel la probabilité d'un événement thermique est insignifiante et l'ajustement du réglage du paramètre de performance identifié comporte l'augmentation du réglage.

13. Le système informatique selon la revendication 8, dans lequel un moyen pour ajuster un réglage du paramètre de performance identifié comprend un moyen pour séquencer l'ajustement sur la base du temps d'accélérateur estimé.

14. Le système informatique selon la revendication 8, dans lequel le PCD se présente sous la forme d'un téléphone sans fil.

15. Un programme informatique comprenant des instructions, qui, lorsqu'elles sont exécutées sur un système informatique selon l'une des revendications 8 à 14, amènent ledit système à effectuer le procédé selon l'une des revendications 1 à 7.
